# EUROPEAN PATENT SPECIFICATION

(11) **EP 3 532 382 B1**
(45) Date of publication and mention of the grant of the patent: **12.05.2021**
(21) Application number: 17792153.3
(22) Date of filing: 26.10.2017
(51) Int. Cl.: B64D 11/06

(54) **A PASSENGER SEATING ARRANGEMENT WITH INWARDLY AND OUTWARDLY FACING SEAT UNITS**
PASSAGIERSITZANORDNUNG MIT GANGZUGEWANDTEN UND GANGABGEWANDTEN SITZEINHEITEN
AGENCEMENT DES SIÈGES DE PASSAGER AVEC DES UNITÉS DE SIÈGE TOURNÉES VERS UN COULOIR ET DÉTOURNÉES DU COULOIR

(30) Priority: 28.10.2016 GB 201618270
(43) Date of publication of application: 04.09.2019
(73) Proprietor: Acumen Design Associates Limited, London WC1V 7BD (GB)
(72) Inventor: ERSAN, Ali, London WC1V 7BD (GB)
(74) Representative: Abel & Imray
(86) International application number: PCT/GB2017/053232
(87) International publication number: WO 2018/078374

(56) References cited:
- WO-A1-2015/155687
- US-A1- 2003 218 095
- US-A1- 2014 283 296

## Description

### Technical Field

The present invention relates to an aircraft passenger seating arrangement, and to seat units for use in an aircraft passenger seating arrangement.

### Background of the Invention

Aircraft passenger seating arrangements having convertible seat units that have both a seat configuration, and a flat-bed configuration are well-known. These convertible seat units are typically provided in business class or first class cabins of an aircraft. In the seat configuration, the seat unit typically provides a relatively upright seat, whereas in the bed configuration, the seat unit tends to form a substantially planar sleeping surface for supporting the passenger. The seat units shown in GB2326824 (British Airways), WO03013903 (Virgin Atlantic) and US 7,178,871 (British Airways) are examples of such convertible seat units (often referred to as having 'lie-flat' seats) that have both a seat configuration, and a flat-bed configuration which offers improved comfort over a reclined seat. Lie-flat seats have been increasingly popular over the last decade or so.

GB2326824 and WO03013903 mentioned above are examples of so-called herringbone arrangements in which the seats are at an angle to the longitudinal axis of the aircraft. By angling the seat units in such a way, the packing efficiency may be increased.

US 7,178,871 mentioned above, and WO 2007/072045 (also British Airways) are examples of seating arrangements having pairs of seat units facing in opposite directions. Such an arrangement may be space-efficient across the width of the cabin because the seating space of one seat unit may extend over the leg space of the adjacent, oppositely facing, seat unit. However, there is an associated problem in such seat designs in that to access seat units that are not directly adjacent an aisle, it tends to be necessary for the passenger to step-over' the space of a neighbouring passenger. This can detrimentally affect the feeling of privacy and personal space for the passengers in one or both of the relevant seats.

The seat units in WO2009/073244 (BE Aerospace) face the same direction (in each column) and are arranged in parallel. However this arrangement also suffers from the problem that the window seat passenger needs to step-over' the space of a neighbouring passenger in order to get to their seat unit.

US 8,348,195 (American Airlines) discloses a herringbone arrangement in which alternate seat units face in alternate directions. Each seat has independent access to an adjacent aisle so passengers do not have to step-over the neighbouring seat to access their own seat. The arrangement is for use on a wide-body aircraft and comprises a two-column-wide array along the centre of the aircraft, bounded by aisles either side and with single-width columns against the aircraft sidewall. Such an arrangement with a double-width central column seeks to make use of the relatively large width of the cabin on a wide-body aircraft.

US 2003/0218095 discloses a seat module having a lateral wall extending between one side of the seat and one side of a fitting. The lateral wall, the seat and the fitting define an elongate space having a wider end occupied by the seat and a narrower end occupied by the fitting. An access opening is disposed between the ends and opposite the lateral wall.

WO 2015/155687, upon which the pre-amble of claim 1 is based, discloses a seat unit configured to transition between a seat position and a bed position. The upper seat back cushion and the lower seat back cushion are separated by a gap located between an end of each cushion when the at least one seat is in the seat position. In contrast, the ends of the cushions are flush with each other when the at least one seat is in the bed position.

US 2014/0283296 discloses two blocks each of two seats convertible for lying down, wherein the two blocks are arranged with the seats of one block face-to-face with the seats of the other block inside a circumscribed rectangle.

The present invention seeks to provide an improved passenger seating assembly.

### Summary of the Invention

According to a first aspect of the invention, there is provided an aircraft cabin comprising a passenger seating arrangement having the features of claim 1. Optional but preferred features are set out in the dependent claims. There may be provided a passenger seating arrangement in an aircraft cabin, the passenger seating arrangement comprising a first column of seat units and second column of seat units, the first and second columns being separated by an aisle, and the columns of seat units and the aisle all extending in a longitudinal direction parallel to the longitudinal axis of the aircraft cabin. Each column comprises a multiplicity of pairs of seat units, the pairs of seat units being arranged consecutively along the longitudinal direction. Each seat unit is configurable between a seating configuration and a flat-bed configuration. Each pair of seat units comprises: an inwardly facing seat unit angled at an acute angle to the longitudinal axis of the aircraft and facing inwardly towards the aisle; an outwardly facing seat unit angled at the same acute angle to the longitudinal axis of the aircraft but facing outwardly away from the aisle; the inwardly and outwardly facing seat units bordering each other along a shared boundary,
and wherein the first column is positioned adjacent a sidewall of the aircraft cabin, and the second column is positioned adjacent either a second aisle or the opposing sidewall of the cabin.

In some embodiments, the second column may be positioned adjacent the opposing sidewall of the cabin. Thus, the cabin may be for a single-aisle aircraft. The aisle may run along the longitudinal axis of the cabin. Embodiments of the invention have been found to be especially beneficial for such a single-aisle aircraft because the seating arrangement tends to be space-efficient whilst still facilitating direct access to each seat unit from the aisle.

In some embodiments, the second column may be positioned adjacent a second aisle. The arrangement may further comprises a third column of pairs of seats units, between the opposing sidewall and the second aisle. The third column may comprise any or all the features of the first column. Thus, the cabin may be for a twin-aisle aircraft, and the seating arrangement may comprise three equal-width columns of pairs of seat units extending along the cabin. Having equal-width columns in both the centre and the sides of the cabin has been found to be more space-efficient than some arrangements having a double-width central column (e.g. US 8,348,195). Furthermore, such an arrangement may allow passengers of seat units in the central column to access the seat units from either aisle.

Each seat unit is configurable between a seating configuration and a flat-bed configuration. This type of reconfigurable seat unit per se is well known in aircraft seating, especially in business class seating. Such a seat unit may sometimes be referred to as a "lie-flat seat".

Each seat unit may comprise a central axis. The central axis preferably extends through the centre of the seat (for example it may bisect a seat pan and/or back-rest of the seat when in the seating configuration). The central axis of each seat unit is preferably fixed (for example the seat units preferably do not comprise swivel seats). The angle of the seat unit is preferably defined as the angle between the central axis and the longitudinal axis of the aircraft.

The inwardly and outwardly facing seat units in each pair of seat units are at substantially the same acute angle to the longitudinal axis of the aircraft. It will be appreciated that the angle is being measured relative to the axes in question and is measured in a consistent manner for both seat units. Thus the direction in which the angle is measured is not related to the orientation of the respective seat unit as such.

In each column the multiplicity of pairs of seat units are preferably identical. Thus, each column is preferably formed by a repeating pattern of identical pairs of seat units. The pairs of seats units are preferably adjacent one another along the longitudinal direction. Within a column, the pairs of seat units are arranged in the same orientation.

The shared boundary may comprise an intra-pair privacy screen extending between the seat units in each pair. The shared boundary may extend in a direction parallel to each seat unit. For example, the shared boundary may extend at the acute angle to the longitudinal axis of the aircraft.

Each seat unit comprises a main body. Each seat unit comprises a foot receiving end. The main body comprises moveable seating elements arranged such that when the seat unit is in the seating configuration the seating elements form a passenger seat but when the seat unit is in the flat-bed configuration, the seating elements form a substantially flat sleeping surface. The moveable seating elements may, for example, comprise a seat pan, a seat back, and/or a footrest. In some embodiments, the moveable seating elements may form substantially all of the sleeping surface when the seat unit is in the flat-bed configuration. In other embodiments, the moveable elements need not necessarily form all of the sleeping surface when the seat unit is in the flat-bed configuration. For example, in some embodiments of the invention, each seat unit may comprises an ancillary bed surface. In the flat-bed configuration, the ancillary bed surface may form part of the sleeping surface in conjunction with the moveable seating elements. The ancillary bed surface may be fixed. The ancillary bed surface may be removeable (for example it may be created by an insert element). The ancillary bed surface may be at a height such that it is co-planar with the flat sleeping surface formed by seating elements when the seat unit is in the flat-bed configuration. The ancillary bed surface may form an extension of the flat sleeping surface formed by seating elements when the seat unit is in the flat-bed configuration. A seat unit may comprise such an ancillary bed surface at a foot receiving end of the seat unit. Alternatively or additionally, the seat unit may comprise such an ancillary bed surface at a head receiving end of the seat unit.

The foot receiving end comprises a wall extending along at least part of a perimeter of the foot receiving end. The end wall defines a partially enclosed space for receiving a passenger's feet when the seat unit is in the flat-bed configuration.

In some embodiments of the invention, the foot receiving end may comprise an ancillary bed surface. The ancillary bed surface may be coplanar with the sleeping surface when the seat unit is in the flat-bed configuration, such that the ancillary bed surface acts as a bed-extension surface. The ancillary bed surface may be fixed. The ancillary bed surface may be suitable as a foot rest when the seat unit is in a seating configuration. For example, the foot-receiving end may comprise an ottoman.

In other embodiments the foot receiving end may not have any ancillary bed surface. For example, it may merely receive a surface (for example one of the moveable seating elements) that forms part of the main body and extends into the foot receiving end when the seat unit is in the flat-bed configuration.

The foot receiving end may comprise an upper table surface. The upper table surface may be located at a height greater than the height of the flat sleeping surface when the seat unit is in the flat-bed configuration. The upper table surface may be for use by the passenger in the adjacent seat unit in the adjacent pair of seat units. Such an arrangement has been found to provide an especially efficient use of space as the foot receiving end can effectively provide a functional benefit to two seat units (i.e. to receive the passenger's feet for one seat unit, and to provide a table surface for another passenger). The foot receiving end may comprise a divider shielding and/or preventing access, to the upper table surface from/by a passenger of that seat unit. Such an arrangement provides a clear delimitation of space between the passengers of the seat units. An in-flight entertainment (IFE) display may be associated with the divider.

Each column comprises a plurality of main body modules, and a plurality of foot modules. Each column may comprise a multiplicity of main body modules, and a multiplicity of foot modules. Each of the modules may be a unitary structure. Each main body module is formed of the main bodies of each of the seat units in a pair of seat units. The main bodies of each of the seat units in a pair may be joined along the shared boundary. Each foot module comprises the foot receiving end of an inwardly facing seat unit of one pair of seat units, and the foot receiving end of the outwardly facing seat unit in an adjacent pair of seat units. The main body modules and the foot modules are independent structures. The main body modules and the foot modules are alternately located along the longitudinal direction of each column. Having the above-mentioned modules has been found to be beneficial because it enables each type of module to be certified independently of the other. The foot modules may be certified to a first g-level (e.g. 9-g). The main body modules may be certified to a second, higher, g-level (e.g. 16-g). This may enable the structure of the foot module to be simplified relative to an arrangement in which it is integral with a main body module.

Each foot module may comprise an inter-pair privacy screen extending between the two foot receiving ends. The inter-pair privacy screen may be non-parallel to the seat units. For example, the inter-pair privacy screen may be non-parallel to the shared boundary between the seat units of a pair and/or to the central axis of the seat units. The inter-pair privacy screen is preferably at a greater angle to the longitudinal axis of the aircraft than the acute angle (at which the seat units are angled to the longitudinal axis of the aircraft). Such an arrangement has been found to be beneficial as it may enable a relatively wide spacing to be created between the foot-receiving end of one seat unit and the main body of an adjacent seat unit in an adjacent pair. This may be used to provide a relatively wide access path and/or provide a minimum width access path but with more closely packed seat units.

The foot receiving end may be laterally offset from the central axis of the seat unit. The offset may be in a direction away from the adjacent seat unit in the adjacent pair of seat units, such that it facilitates access to that adjacent seat unit in the adjacent pair. The offset may be characterised by a notional line defining the maximum length of the seat unit (for example the maximum bed length in the flat-bed configuration) being non-parallel to the central axis of the seat unit. Such an arrangement may be used to provide a relatively wide access path and/or provide a minimum width access path by with more closely packed seat units.

Each main body may comprise a shroud located behind the seat back. The shroud may extending to a first height from the aisle floor. The end wall of the foot receiving end may extend to a second, lower height from the aisle floor. The minimum lateral distance across the aisle between shrouds of the outwardly facing seat units in each column, may be greater than the minimum lateral distance across the aisle between the end walls of the inwardly facing seat unit in each column. Such an arrangement takes advantage of the fact that aircraft safety regulations require a different (smaller) minimum aisle width at and close to the floor-level of the aisle, compared with at a higher level above the floor. The seat units in each pair of seat units are preferably substantially identical (except for orientation). In such embodiments, a consequence of the above-mentioned use of aisle width is that the maximum lateral width across the column between end walls of the foot receiving ends (of adjacent inward and outwardly facing seat units), may be greater than the maximum lateral width between shrouds (of adjacent inward and outwardly facing seat units). Thus, although having different widths at different heights is known per se to improve the use of the space surrounding the aisle, this feature has been found to provide an additional, and surprising, benefit in embodiments of the present invention. In particular, since in embodiments of the present invention the pairs of seat units have inwardly and outwardly facing seat units, the end wall of the foot receiving end of the outwardly facing seat units may accordingly extend (laterally) a further distance than an adjacent shroud. In at least the first column, this means the foot receiving end extends closer to the aircraft sidewall than the shroud of the inwardly facing seat units. This maximises the use of the extra space that is present closer to the floor due to the curvature of the sidewall.

The exact value of the acute angle of the seats relative to the longitudinal axis of the aircraft may depend on the size of the aircraft cabin in question. However, the present invention has recognised certain beneficial ranges of acute angle. The acute angle is at least 30 degrees or more, and more preferably the acute angle is at least 34 degrees or more. The acute angle may be at least 45 degrees or more. The acute angle may be up to 50 degrees. The acute angle may be in the range of between 34 and 50 degrees.

Each column is preferably two seat units-wide. The main body of one seat unit a pair may be beside the main body of the other seat unit in the pair. Thus, the total dimension of the pair of main bodies in the longitudinal direction may be substantially equal to the dimension of each main body in the longitudinal direction. The main body of one seat unit a pair may be offset (in the longitudinal direction) with respect to the main body of the other seat unit in the pair. Thus, the total dimension of the pair of main bodies in the longitudinal direction may be greater than the dimension of each main body in the longitudinal direction. The total dimension of the pair of main bodies in the longitudinal direction may be no more than 25% greater than the dimension of each main body in the longitudinal direction. The total dimension of the pair of main bodies in the longitudinal direction may be no more than 20% greater than the dimension of each main body in the longitudinal direction. The total dimension of the pair of main bodies in the longitudinal direction may be no more than 10% greater than the dimension of each main body in the longitudinal direction.

In some embodiments of the invention, the pairs of seat units in the first column are orientated in a mirror image, across the longitudinal axis of the aisle, of the pairs of seat units in the second column. For example, the outwardly facing seat units may all be facing one of forwards or backwards, and the inwardly facing seat units may all be facing the other of forwards or backwards. The pairs of seat units may be orientated in a mirror image, but may still be offset in a longitudinal direction.

In other embodiments of the invention, the pairs of seat units in the first column may be orientated in the same direction as the pairs of seat units in the second column. Thus, the outwardly facing seat units in one column may be facing one of forwards or backwards, and the outwardly facing seat units in the other column may be facing the other of forwards or backwards. Equally, the inwardly facing seat units in one column may be facing one of forwards or backwards, and the inwardly facing seat units in the other column may be facing the other of forwards or backwards.

It will be appreciated that the inward/outward facing of the seat units refers to their orientation relative to the aisle (i.e. whether the passenger would be facing towards or away from the aisle). In contrast, the forward /backward facing of the seat units refers to their orientation relative to the direction of travel of the aircraft (i.e. whether the passenger would be facing towards the front of the aircraft or towards the rear of the aircraft).

Each pair of seat units within a column is preferably substantially identical. Each pair of seat units in one column is preferably substantially identical to each pair of seat units in another column (although the orientation of the pairs of seat units may differ in some embodiments). Each column of seat units extends in a longitudinal direction. The lateral extent of each seat units within each pair of seat units (i.e. the width perpendicular to the longitudinal direction) is preferably equal. Thus, the seat units in each pair preferably extend to a shared, substantially linear, longitudinal boundary along the aisle.

Although the seat units within each pair of seat units face in opposing directions, relative to the aisle, the seat units within that pair may be substantially identical (i.e. of the same width, length, construction etc.). The length of the flat sleeping surface provided by each seat unit in a pair (when the seat unit is in the flat-bed configuration) may be substantially identical.

According to an example arrangement, there may be provided a passenger seating arrangement in a cabin of a single aisle aircraft, the passenger seating arrangement comprising: a first column of seat units located adjacent a sidewall of the aircraft cabin on one side and adjacent the aisle on the other side and a second column of seat units located adjacent the opposing sidewall of the aircraft cabin on one side and adjacent the aisle on the other side, the columns of seat units and the aisle all extending in a longitudinal direction parallel to the longitudinal axis of the aircraft cabin, and wherein each column comprises a multiplicity of pairs of seat units located along the length of each column, each seat unit being configurable between a seating configuration and a flat-bed configuration, wherein each pair of seat units comprises substantially identical, but oppositely oriented seat units, such that one seat unit is inwardly facing, angled at an acute angle to the longitudinal direction and the other seat unit is outwardly facing angled at the acute angle to the longitudinal direction but in the opposite direction.

According to an example arrangement, there may be provided a passenger seating arrangement in a cabin of a twin-aisle aircraft, the passenger seating arrangement comprising: a first column of seat units located adjacent a sidewall of the aircraft cabin on one side and adjacent a first aisle on the other side; a second column of seat units located along the longitudinal axis of the cabin and being adjacent the first aisle on one side, and being adjacent a second aisle on the other side, and a third column of seat units located adjacent the opposing sidewall of the aircraft cabin on one side and adjacent the second aisle on the other side; the columns of seat units and the aisles all extending in a longitudinal direction parallel to the longitudinal axis of the aircraft cabin, and wherein each column comprises a multiplicity of pairs of seat units located along the length of each column, each seat unit being configurable between a seating configuration and a flat-bed configuration, wherein each pair of seat units comprises substantially identical, but oppositely oriented seat units, such that one seat unit is inwardly facing, angled at an acute angle to the longitudinal direction and the other seat unit is outwardly facing angled at the acute angle to the longitudinal direction but in the opposite direction.

According to an example arrangement, there may be provided a passenger seating arrangement for use in any aspect described herein. The seating arrangement may comprise a first column of seat units and second column of seat units, the first and second columns being separated by an aisle width, and the columns of seat units and the aisle all extending in a longitudinal direction, and wherein each column comprises a multiplicity of pairs of seat units, the pairs of seat units being arranged consecutively along the longitudinal direction, each seat unit being configurable between a seating configuration and a flat-bed configuration, wherein each pair of seat units comprises: an inwardly facing seat unit angled at an acute angle to the longitudinal axis of the aircraft and facing inwardly towards the aisle; an outwardly facing seat unit angled at the acute angle to the longitudinal axis of the aircraft but facing outwardly away from the aisle. The inwardly and outwardly facing seat units may border each other along a shared boundary. The first column is for positioning adjacent a sidewall of the aircraft cabin, and the second column is for positioning adjacent either a second aisle or the opposing sidewall of the cabin.

According to an example arrangement, there may be provided a pair of seat units for use as one of the pairs of seat units in the seating arrangements described herein. The pair of seat units is suitable for arranging adjacent to one another along a longitudinal direction, and wherein: each seat unit is configurable between a seating configuration and a flat-bed configuration, and the pair of seat units comprises: an inwardly facing seat unit angled at an acute angle to the longitudinal axis of the aircraft and facing inwardly towards an aisle; an outwardly facing seat unit angled at the acute angle to the longitudinal axis of the aircraft but facing outwardly away from the aisle; the inwardly and outwardly facing seat units may border each other along a shared boundary.

It will be appreciated that any features described with reference to one aspect of the invention are equally applicable to any other aspect of the invention, and vice versa. It will also be appreciated that reference above to one or more features of a seat unit may be applicable to any or all of the other seat units described herein.

### Description of the Drawings

Various embodiments of the invention will now be described, by way of example only, with reference to the accompanying schematic drawings of which:
Figure 1 is a plan view of part of a passenger seating arrangement according to a first embodiment of the invention;
Figure 2 is a perspective view of part of the arrangement on Figure 1;
Figure 3 is a plan view of four seat units in the arrangement of Figure 1, but with two of them in a flat-bed configuration;
Figure 4 is a view of the four seat units of Figure 2, but with all of them in a flat-bed configuration;
Figure 5 is an expanded view showing the business-class cabin on a single-aisle aircraft with the seating arrangement in Figures 1 to 4;
Figure 6 is a plan view of part of a passenger seating arrangement according to a second embodiment of the invention;
Figure 7 is a plan view a passenger seating arrangement in a cabin according to a third embodiment of the invention;
Figure 8 is a plan view of a passenger seating arrangement in an aircraft cabin according to a fourth embodiment of the invention;
Figure 9 is a plan view of part of the passenger seating arrangement of Figure 8; and
Figure 10 is a plan view of part of a passenger seating arrangement in a cabin according to a fifth embodiment of the invention.

### Detailed Description

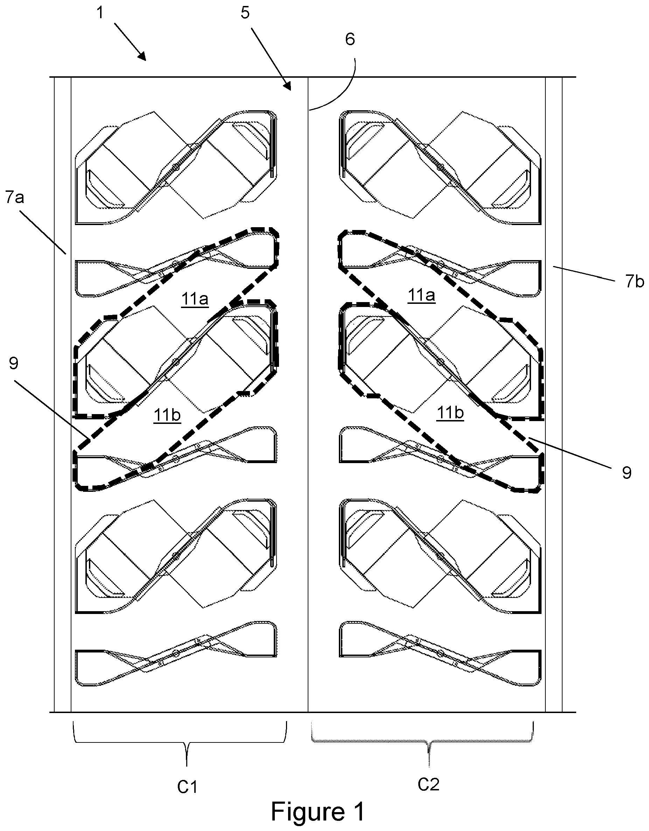

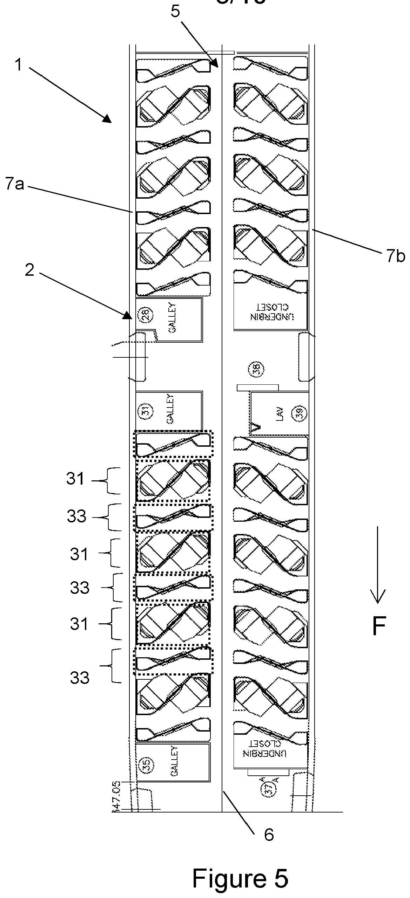

Figure 1 is a schematic plan view of part of a passenger seating arrangement 1 according to a first embodiment of the invention. A passenger seating arrangement 1 is in the business class section of an aircraft cabin 2 (shown in Figure 5) .

The passenger seating arrangement 1 comprises a first column of seat units C1 and second column of seat units C2. The first and second columns C1, C2 are separated by an aisle 5 aligned with the longitudinal axis 6 of the cabin. As is most clearly indicated in Figure 5, the columns of seat units C1, C2 and the aisle 5 all extend in a longitudinal direction parallel to longitudinal axis 6 of the cabin 2 (also parallel to the flight direction F). The aircraft cabin is defined by sidewalls 7a, 7b. The cabin 2 comprises several non-seating areas, such as galleys and lavatories, but these are largely conventional and are not described further with reference to the present invention.

Referring back to Figure 1, each column C1, C2 comprises several pairs 9 of seat units (an example pair 9 in each column is highlighted by way of a schematic thicker dashed outline in Figure 1). The pairs 9 of seat units in each column C1, C2, and the seat units 11a, 11b within them, (see below) are substantially identical except for their orientation/position.

In each column C1, C2, the pairs 9 of seat units are arranged adjacent to one another along the longitudinal direction (i.e. neighbouring pairs 9 of seat units are located along the length of each column C1, C2).

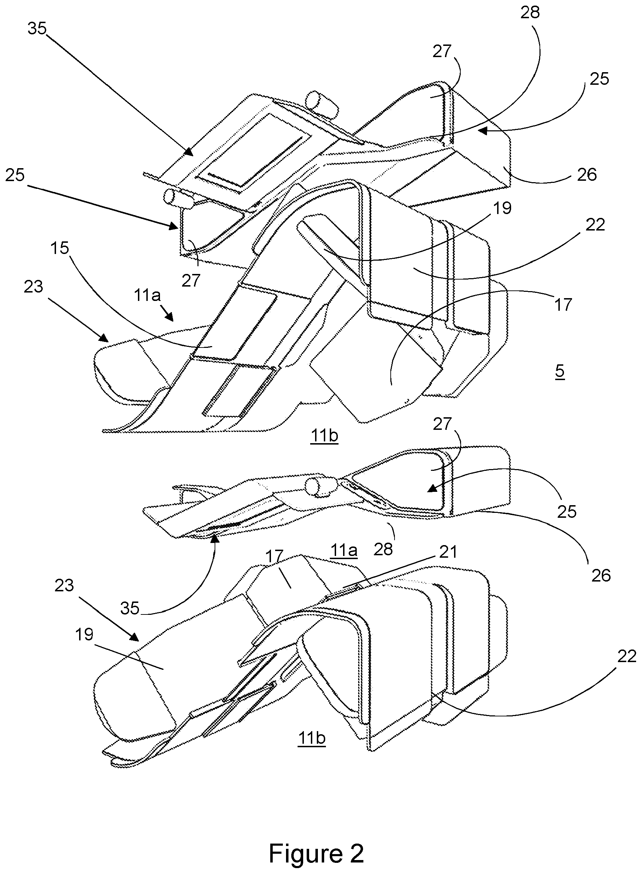

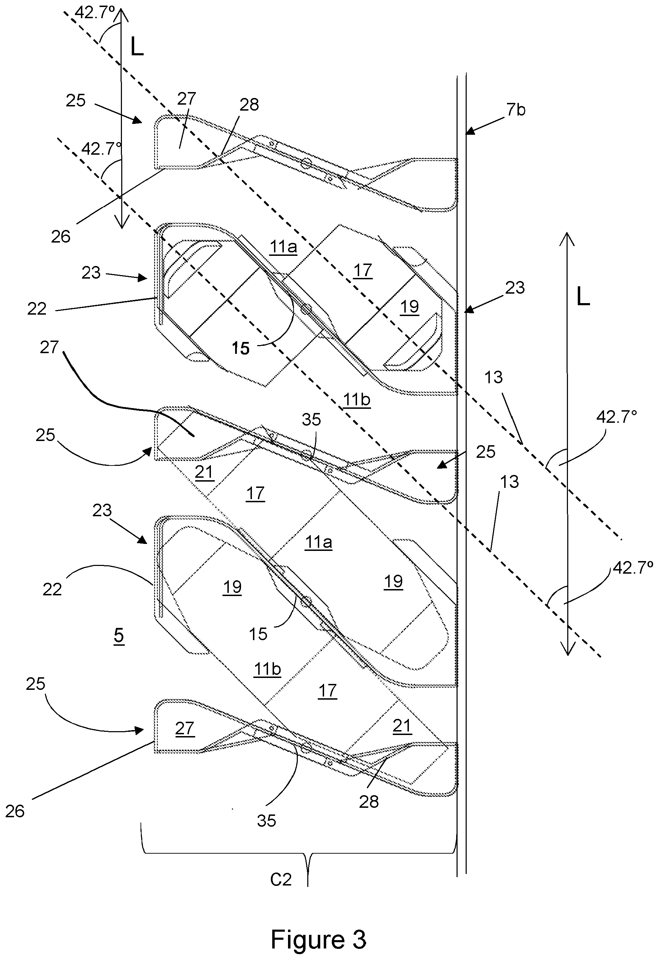

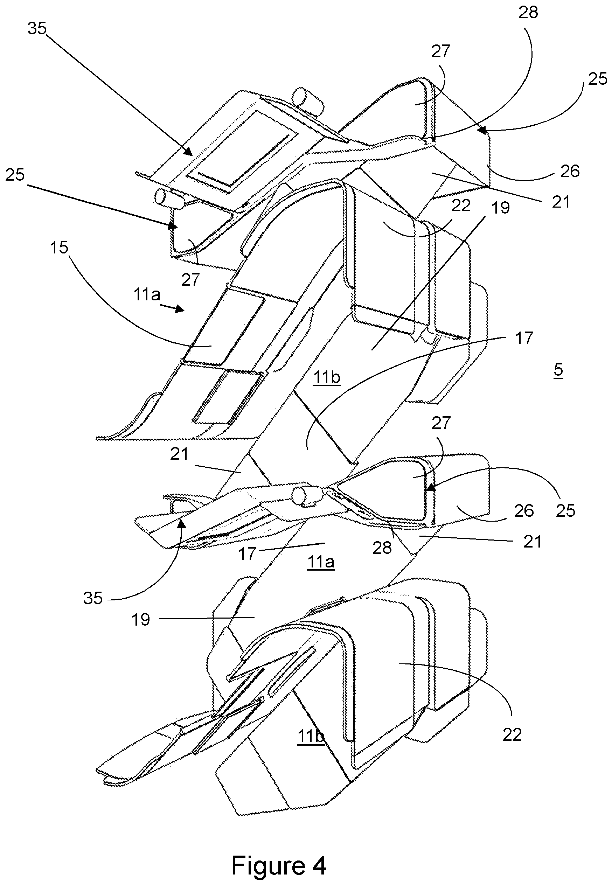

Figures 2 to 4 shows two adjacent pairs 9 of seat units in isolation, and features of one of those pairs of seat units are described below in detail. The two pairs of seats in Figure 3 are taken from column C2 in Figure 1, and the two pairs of seat units in Figures 2 and 4 are taken from column C1 of Figure 1. In the description below, where reference is made to only the one pair 9 of seat units, or to only one seat unit 11a, 11b within that pair, it will be appreciated that the description applies equally to other corresponding pairs 9 or other corresponding seat units 11a, 11b in the seating arrangement 1. Also, for the sake of clarity, not all reference numerals used in Figures 1, 2, 3 or 4 are necessarily repeated in the other drawings (e.g. in the others of Figures 1, 2, 3, or 4), nor are they necessarily shown for every occurrence of that feature. The other seat units shown in Figures 1 to 5 do, of course, have those features but some of them are merely not labelled.

Referring now to Figures 2 to 4, a pair 9 of seat units comprises: an inwardly facing seat unit 11a (e.g. uppermost in Figure 3) and an outwardly facing seat unit 11b (e.g. lowermost in Figure 3). The inwardly facing seat unit 11a is angled at 42.7 degrees to the longitudinal direction L (which is parallel to the longitudinal axis 6 of the cabin) and faces inwardly towards the aisle 5. The outwardly facing seat unit 11b is angled at the same angle (42.7 degrees) to the longitudinal direction but facing outwardly away from the aisle 5.

The angle of the seat unit to the longitudinal direction is measured by the angle that the central seat unit axis 13 makes with the longitudinal direction L (and the aisle axis 6). The central axis of a seat unit is the axis that bisects the seat body of the respective seat unit 11a/11b.

The inwardly facing seat unit 11a faces backwards (relative to the direction of flight F (see Figure 5)), whereas the outwardly facing seat unit faces forwards (relative to the direction of flight F).

The inwardly facing seat unit 11a and outwardly facing seat unit 11b in each pair 9 of seat units, border each other along an intra-pair privacy screen 15 that lies along a shared boundary. That boundary runs parallel to the central axis 13 of the seat units (i.e. at 42.7 degrees to the longitudinal direction L). The privacy screen 15 is selectively retractable such that it can be raised or lowered depending on whether passengers in the seat units wish to interact with each other. In Figures 2 and 4 the screen 15 is shown raised in the upper-most seat pair 9 and lowered on the lower-most seat pair 9.

Each seat unit 11a, 11b comprises a main body 23 and a foot receiving end 25. The main body 23 has a moveable seat pan 17, movable back rest 19 and moveable leg support 21. A shroud 22 surrounds the back rest 19. The foot receiving end 25 is spaced apart from the main body 23 and is in the form of a curved end wall 26 extending from the cabin floor having an upper table surface 27. The foot receiving end does not comprise an ottoman. Instead, the end wall 26 defines a partially enclosed space into which the passenger may insert their feet when the seat unit is in the flat-bed configuration. A low divider 28 shields the table surface 27 from the passenger in that seat unit 11a, 11b, but the table surface 27 is instead accessible to the passenger in the adjacent seat unit, thereby providing a convenient surface to one side of their seat unit.

Each seat unit 11a, 11b is configurable between a seating configuration and a flat-bed configuration. In the seating configuration (shown for the seat units in Figures 1 and 2) the moveable elements 17, 19, 21 of the main body 23 form an upright passenger seat with the foot receiving end 25 located in front of the seat. The moveable seat pan 17, movable back rest 19 and moveable leg support 21 may, however, be configured into a 75 inch long flat sleeping surface (shown in the lowermost pair 9 in Figure 3, and all the pairs in Figure 4) such that the seat unit is in a flat-bed configuration. In that flat-bed configuration, the moveable elements are all coplanar and the leg rest 21 extends into the space enclosed by the wall 26 of the foot receiving end 25. The use of moveable seat elements and conversion between a seating configuration and a lie-flat configuration is known per se and will not be described in further detail herein. The benefits enabled by embodiments of the present invention tend to instead reside in other aspects of the seat units, and their layout, as will now be described in more detail.

Firstly, in the first embodiment of the invention, the seating arrangement 1 is provided in a single aisle aircraft. Each column C1, C2 borders the aisle 5 on one side and the aircraft sidewall on the other side. Providing columns C1, C2 of pairs 9 of seat units having alternately facing inward and outward seats units 11a, 11b (relative to the aisle) has been found to be an especially space-efficient way of providing passenger seating on a single aisle aircraft, without compromising passenger access to each seat unit.

Secondly, as is most clearly shown in the expanded view in Figure 5, the respective main bodies 23 of seat units 11a, 11b in each pair 9 of seat units, are arranged in pairs as a series of modules 31 spaced along the length of each column. The foot receiving end 25 of the inwardly facing seat unit 11a of each pair 9 of seat units, and the foot receiving end 25 of the outwardly facing seat unit 11b in an adjacent pair 9 of seat units are also arranged as a series of modules 33 alternately located along the longitudinal direction of each column between the main body modules 31. For ease of reference some of the modules 31, 33 are demarked within dotted squares in Figure. Providing separate modules for the main bodies 23 of the seat units 11a, 11b and the foot receiving ends 25 is advantageous because they can be constructed to different standards with respect to certification. Specifically, the main body modules 31 contain the passenger when seated and are therefore certified to 16-g, but the foot receiving end modules 33 do not house the passenger when seated and can therefore be certified to a lower g loading (9-g in this case).

The end wall 26 of the foot receiving end is asymmetrical (about the centre line of the foot receiving end). On one side, it smoothly blends into an inter-pair privacy screen 35, which is orientated at angle to the central axis 13 of the seat units 11a, 11b. Such an arrangement has been found to be beneficial as it may enable a relatively wide spacing to be created between the foot-receiving end 25 of one seat unit and the main body 23 of an adjacent seat unit in an adjacent pair.

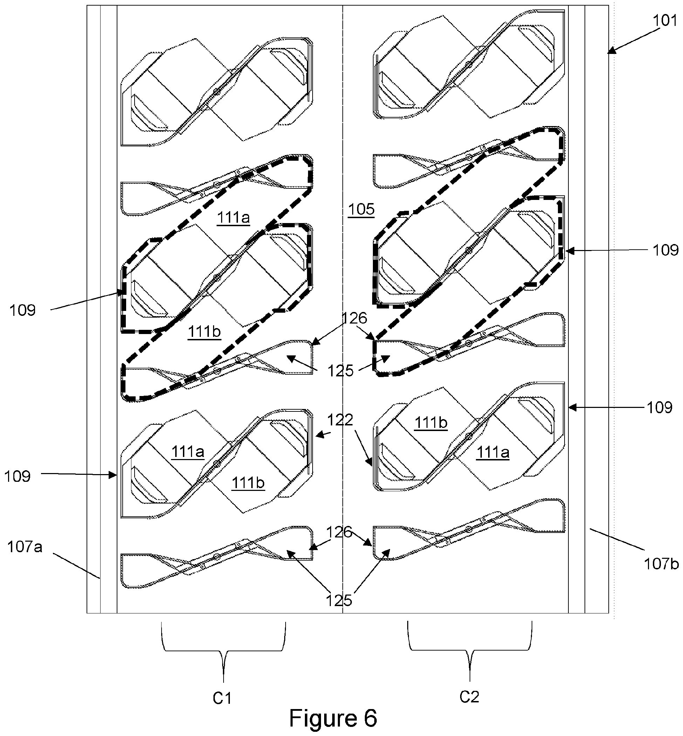

Figure 6 shows a second embodiment of the invention. Features in the second embodiment of the invention that correspond to similar features in the first embodiment of the invention, are shown with the same reference numerals as in the first embodiment, but with the addition of the prefix '1' (or '10' where appropriate). The second embodiment is the same as the first embodiment except for the differences described below:

In the first embodiment of the invention, the pairs of seat units 9 are mirror images about a plane of symmetry along the longitudinal axis 6 of the cabin. In contrast, in the second embodiment of the invention, the pairs 109 of seat units in the first column C1 are orientated in the same direction as the pairs of seat units 109 in the second column C2. The shrouds 122 of opposing outwardly facing seats 111b are opposite one another, and the opposing end walls 126 of the opposing foot receiving ends 125 are opposite one another, across the aisle 105.

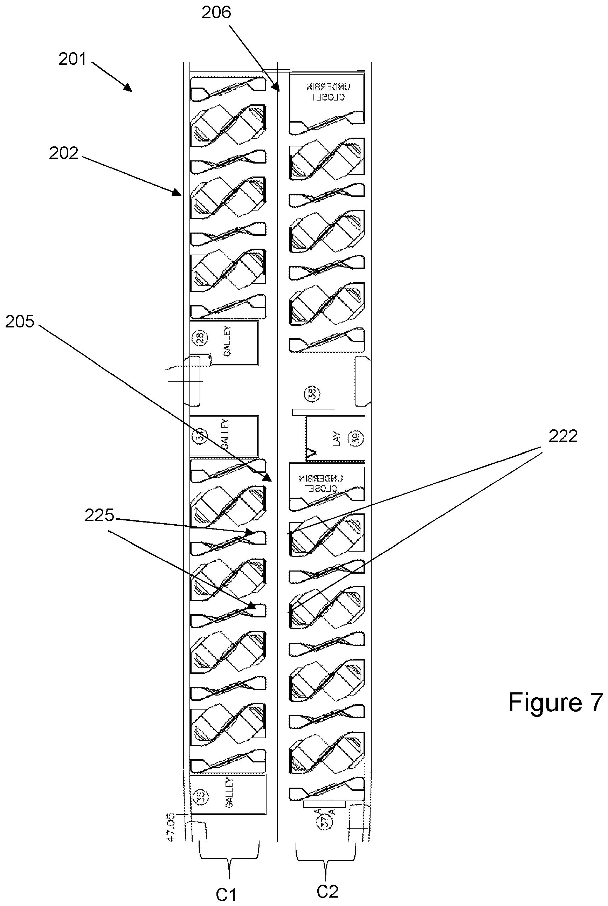

Figure 7 show a third embodiment of the invention. The third embodiment is the same as the second embodiment except that the pairs of seat units 109 in each column C1, C2 are offset (staggered) relative to one another in a longitudinal direction. Thus, along the aisle 205 the foot receiving ends 225 of pairs in one column C2/C1 are opposite the shrouds 222 of the head-receiving end of the pairs in the other column C1/C2.

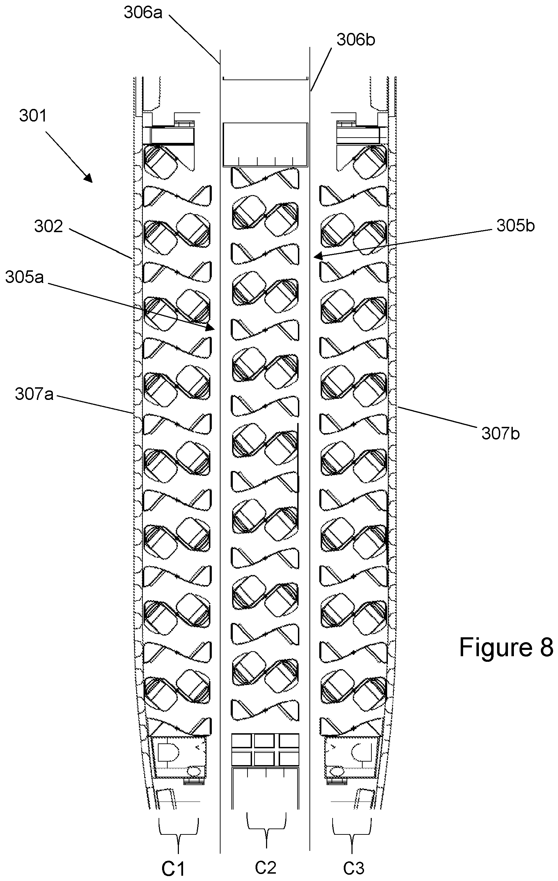

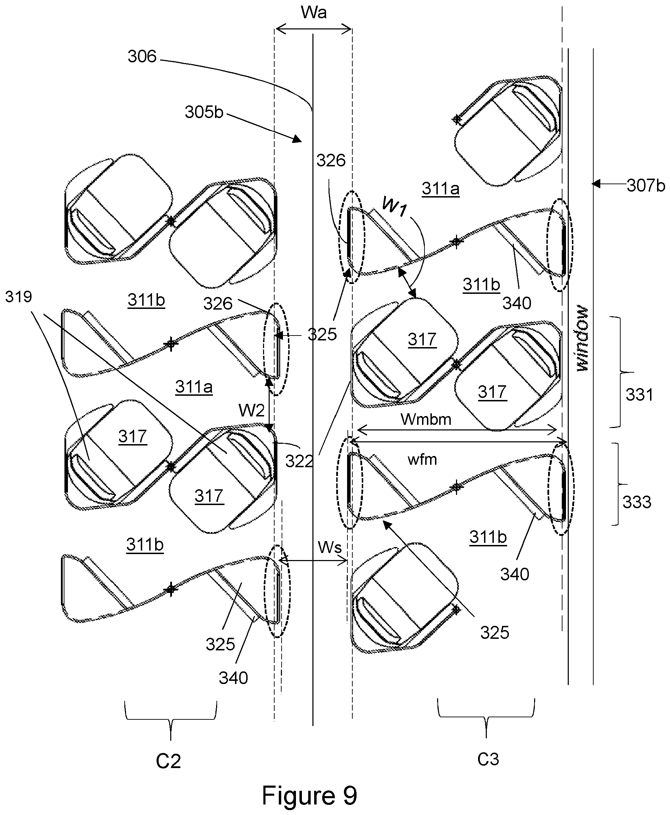

Figures 8 and 9 show a fourth embodiment of the invention. The shape and construction of the pairs of seat units are broadly similar construction to those in the third embodiment (except for the difference described below with reference to Figure 9). However, in the fourth embodiment of the invention the passenger seating arrangement 301 is on a twin-aisle aircraft cabin 302. Referring first to Figure 8, the cabin 302 comprises a first column C1 of seat units between the left-hand side wall 307a and the first aisle 305a; a second, central column C2 of seat units between the first aisle 205a and a second aisle 305b; and a third column C3 of seat units between the second aisle 305b and the right-hand side wall 307b. The second and third columns C2 and C3 are of broadly similar layout to the two columns in Figure 7. The first column C1 is a (staggered) mirror image of the second column C2 across the centre-line 306a of the first aisle 305a

The central column C2 of pairs 309 of seat units is only two-seat units wide (i.e. the same width as the other columns C1, C3). Having equal-width columns in both the centre and the sides of the cabin has been found to be more space-efficient than some known twin-aisle arrangements, which tend to have a double-width central column of seat units. Furthermore, such an arrangement allows passengers of seat units in the central column to access the seat units from either aisle.

Figure 9 shows a close-up view of part of the seating arrangement in columns C2 and C3 (column C1 not being visible in this Figure). Some aspects of the seat units (for example the alternating layout of foot receiving modules 333 and the main body modules 331) are substantially as described with reference to the other embodiments. However, there are some differences: firstly, the magnitude of the acute angle is slightly higher (46.8 degrees in the fourth embodiment); secondly, the foot receiving ends 325 comprise an ottoman. Thus, the foot receiving ends include an internal shelf 340 onto which the passenger may please their feet, and which may act as a bed extension surface (co-planar with the moveable seating elements) when the seat unit is in the flat-bed configuration. Only an edge of the shelf 340 is visible in the plan view of Figure 9 (the remainder being obscured by the table 327).

In the seating arrangement 301 of the fourth embodiment, the width W2 of the access path between the foot receiving end 325 of the inwardly facing seats 311a and the shroud 322 of the outwardly facing seat units 311b in each pair is relatively large (13 inches), whereas the width W1 of the access path between the foot receiving end of the inwardly facing seats 311a and the seat pan 317 of the outwardly facing seat units 311b of the adjacent pair is 9.14 inches.

The fourth embodiment also provides an especially efficient use of the cabin width: Figure 9 shows a dotted line demarking the width Wa of the aisle 305b. This width Wa is the maximum lateral distance between the shrouds 322 of opposing outwardly facing seat units 311b on either side of the aisle 305b. Aircraft safety regulations allow a smaller aisle width closer to the cabin floor. In the first embodiment of the invention, the walls 326 of the foot receiving ends 325 therefore protrude slightly beyond the width demarked by the distance between shrouds (highlighted with dashed oblongs in Figure 9), such that there is a smaller lateral distance Ws between the foot receiving ends of opposing inwardly facing seat units 311a on either side of the aisle 305b (although that aisle width is still within aircraft safety regulations). Since the seat units 311a, 311b are of essentially identical construction, but are alternately orientated (inwardly and outwardly facing) a consequence of the foot receiving ends 325 protruding beyond the shrouds 322 into the aisle 5, is that on the opposing side of the column the foot receiving ends 325 (i.e. of the outwardly facing seat units 311b) will extend closer to the sidewall 307b of the aircraft than the shrouds 322 (see dashed oblongs against the sidewall 7b in Figure 9). In other words, the width Wfm of the foot modules 333, is greater than the width Wmbm of the main body modules. This is beneficial as it maximises the use of the available space close to the cabin floor, compared to at the shroud height where the cabin sidewall 307b curves inwardly. The same is true on column C1 bordering the other aisle 305a.

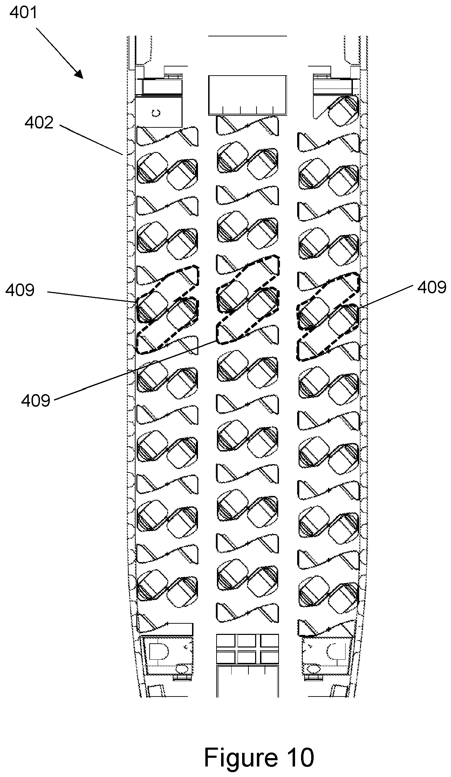

Figure 10 shows a fifth embodiment of the invention. The fifth embodiment is also on a twin-aisle aircraft and is the same as the fourth embodiment except for the layout and orientation of the seat pairs in the first column C1. Notably, in the fifth embodiment of the invention, the pairs 409 of seat units in the first, second and third columns C1, C2 and C3 are all orientated in the same direction rather than columns C1 and C2 being mirror images.

Whilst the present invention has been described and illustrated with reference to particular embodiments, it will be appreciated by those of ordinary skill in the art that the invention lends itself to many different variations not specifically illustrated herein. Reference should be made to the claims for determining the true scope of the present invention. It will also be appreciated by the reader that integers or features of the invention that are described as preferable, advantageous, convenient or the like are optional and do not limit the scope of the independent claims.

## Claims

1. An aircraft cabin comprising a passenger seating arrangement, the passenger seating arrangement comprising a first column (C1) of seat units and second column (C2) of seat units, the first and second columns (C1, C2) being separated by an aisle, and the columns of seat units and the aisle (5) all extending in a longitudinal direction parallel to the longitudinal axis of the aircraft cabin, and wherein
each column (C1, C2) comprises a multiplicity of pairs (9) of seat units, the pairs (9) of seat units being arranged consecutively along the longitudinal direction,
each seat unit being configurable between a seating configuration and a flat-bed configuration,
wherein each pair (9) of seat units comprises:
an inwardly facing seat unit (11a) angled at an acute angle to the longitudinal axis of the aircraft and facing inwardly towards the aisle (5);
an outwardly facing seat unit (11b) angled at the same acute angle to the longitudinal axis of the aircraft but facing outwardly away from the aisle (5);
the inwardly and outwardly facing seat units (11a, 11b) bordering each other along a shared boundary,
and wherein
the first column (C1) is positioned adjacent a sidewall (20) of the aircraft cabin, and
the second column (C2) is positioned adjacent either a second aisle or the opposing sidewall of the cabin,
wherein each seat unit comprises a main body (23) and a foot receiving end (25),
the main body (23) comprising moveable seating elements arranged such that when the seat unit is in the seating configuration the seating elements form a passenger seat but when the seating unit is in the flat-bed configuration, the seating elements form a substantially flat sleeping surface, and
the foot receiving end (25) being configured to receive a passenger's feet when the seat unit is in the flat-bed configuration, the foot receiving end comprising a wall (26) extending along at least part of a perimeter of the foot receiving end (25), and
wherein each column (C1, C2) comprises a plurality of main body modules (31), and a plurality of foot modules (33),
**characterised in that**
each main body module (31) is formed of the main bodies of each of the seat units in a pair (9) of seat units, and
each foot module (33) comprises the foot receiving end (25) of an inwardly facing seat unit (11a) of one pair (9) of seat units, and the foot receiving end of the outwardly facing seat unit (11b) in an adjacent pair (9) of seat units, and
the main body modules (31) and the foot modules (33) are independent structures and are alternately located along the longitudinal direction of each column (C1, C2).

2. An aircraft cabin comprising a passenger seating arrangement according to claim 1, wherein the second column (C2) is positioned adjacent the opposing sidewall of the cabin.

3. An aircraft cabin comprising a passenger seating arrangement according to claim 1, wherein the second column (C2) is positioned adjacent a second aisle, and the arrangement further comprises a third column (C3) of pairs of seat units between the opposing sidewall and the second aisle.

4. An aircraft cabin comprising a passenger seating arrangement according to any preceding
claim, wherein the foot receiving end further comprises an ancillary bed surface (340), the ancillary bed surface (340) being at a height such that it is co-planar with the flat sleeping surface when the seat unit is in the flat-bed configuration.

5. An aircraft cabin comprising a passenger seating arrangement according to any preceding claim, wherein the foot receiving end (33) comprises an upper table surface (27), the table surface (27) being located at a height greater than the height of the flat sleeping surface when the seat unit is in the flat-bed configuration.

6. An aircraft cabin comprising a passenger seating arrangement according to claim 5, wherein the upper table surface (27) is for use by the passenger in the adjacent seat unit in the adjacent pair (9) of seat units.

7. An aircraft cabin comprising a passenger seating arrangement according to claim 5 or claim 6, wherein the foot receiving end (33) comprises a divider shielding the upper table surface from a passenger of that seat unit.

8. An aircraft cabin comprising a passenger seating arrangement according to any preceding claim, wherein the foot modules (33) are certified to a first g-level, and the main body modules (31) are certified to a second, higher, g-level.

9. An aircraft cabin comprising a passenger seating arrangement according to any preceding claim, wherein each foot module (33) comprises an inter-pair privacy screen (35) extending between the two foot receiving ends, and
wherein the inter-pair privacy screen (35) is non-parallel to the shared boundary between the seat units.

10. An aircraft cabin comprising a passenger seating arrangement according to any preceding claim, wherein each seat unit comprises a central axis, forming the acute angle to the longitudinal axis of the aircraft, and wherein the foot receiving end is laterally offset from the central axis, and
wherein the offset is in a direction away from the adjacent seat unit in the adjacent pair (9) of seat units, such that it facilitates access to that adjacent seat unit in the adjacent pair.

11. An aircraft cabin comprising a passenger seating arrangement according to any preceding claim, wherein each main body (23) comprises a shroud located behind the seat back and extending to a first height from the aisle floor, and the end wall (26) of the foot receiving end extends to a second, lower height from the aisle floor
wherein the minimum lateral distance across the aisle between shrouds of the outwardly facing seat units (11b) in each column (C1, C2), is greater than the minimum lateral distance across the aisle between the end walls (26)of the inwardly facing seat unit (11a) in each column (C1, C2).

12. An aircraft cabin comprising a passenger seating arrangement according to any preceding claim, wherein the acute angle is at least 34 degrees or more.

13. An aircraft cabin comprising a passenger seating arrangement according to any preceding claim, wherein the pairs of seat units in the first column are offset, in a longitudinal direction, from the pairs of seat units in the second column.

## Patentansprüche

1. Flugzeugkabine, die eine Passagiersitzanordnung umfasst, wobei die Passagiersitzanordnung eine erste Reihe (C1) Sitzeinheiten und eine zweite Reihe (C2) Sitzeinheiten umfasst, die ersten und zweiten Reihen (C1, C2) durch einen Gang getrennt sind, und die Reihen Sitzeinheiten und der Gang (5) alle in Längsrichtung parallel zur Längsachse der Flugzeugkabine verlaufen, und wobei
jede Reihe (C1, C2) eine Vielzahl von Paaren (9) von Sitzeinheiten umfasst, wobei die Paare (9) von Sitzeinheiten hintereinander entlang der Längsrichtung angeordnet sind,
jede Sitzeinheit konfigurierbar ist zwischen einer Sitzkonfiguration und einer Flachbettkonfiguration ,
wobei jedes Paar (9) Sitzeinheiten umfasst:
eine nach innen gewandte Sitzeinheit (11a), die in einem spitzen Winkel zur Längsachse des Flugzeugs angewinkelt ist und nach innen dem Gang (5) zugewandt ist,
eine nach außen gewandte Sitzeinheit (11b), die in demselben spitzen Winkel zur Längsachse des Flugzeugs angewinkelt ist, jedoch nach außen dem Gang (5) abgewandt ist,
wobei die nach innen und nach außen gewandten Sitzeinheiten (11a, 11b) entlang einer gemeinsamen Grenze aneinandergrenzen,
und wobei
die erste Reihe (C1) neben einer Seitenwand (20) der Flugzeugkabine positioniert ist und
die zweite Reihe (C2) neben entweder einem zweiten Gang oder der gegenüberliegenden Seitenwand der Kabine positioniert ist,
wobei jede Sitzeinheit einen Hauptteil (23) und ein Fußaufnahmeende (25) umfasst,
der Hauptteil (23) bewegliche Sitzelemente umfasst, die so angeordnet sind, dass wenn die Sitzeinheit sich in der Sitzkonfiguration befindet, die Sitzelemente einen Passagiersitz bilden, wenn jedoch die Sitzeinheit sich in der Flachbettkonfiguration befindet, die Sitzelemente eine im Wesentlichen flache Schlaffläche bilden, und
das Fußaufnahmeende (25) so konfiguriert ist, dass es die Füße eines Passagiers aufnimmt, wenn die Sitzeinheit sich in der Flachbettkonfiguration befindet, das Fußaufnahmeende eine Wand (26) umfasst, die entlang wenigstens eines Teils eines Perimeters des Fußaufnahmeendes (25) verläuft, und
wobei jede Reihe (C1, C2) eine Mehrzahl von Hauptteilmodulen (31) und eine Mehrzahl von Fußmodulen (33) umfasst,
**dadurch gekennzeichnet, dass**
jedes Hauptteilmodul (31) aus den Hauptteilen einer jeden der Sitzeinheiten in einem Paar (9) Sitzeinheiten gebildet wird, und
jedes Fußmodul (33) das Fußaufnahmeende (25) einer nach innen gewandten Sitzeinheit (11a) eines Paars (9) Sitzeinheiten und das Fußaufnahmeende der nach außen gewandten Sitzeinheit (11b) in einem benachbarten Paar (9) Sitzeinheiten umfasst, und
die Hauptteilmodule (31) und die Fußmodule (33) unabhängige Strukturen sind und sich abwechselnd entlang der Längsrichtung einer jeden Reihe (C1, C2) befinden.

2. Flugzeugkabine umfassend eine Passagiersitzanordnung gemäß Anspruch 1, wobei die zweite Reihe (C2) neben der gegenüberliegenden Seitenwand der Kabine positioniert ist.

3. Flugzeugkabine umfassend eine Passagiersitzanordnung gemäß Anspruch 1, wobei die zweite Reihe (C2) neben einem zweiten Gang positioniert ist und die Anordnung ferner eine dritte Reihe (C3) von Paaren von Sitzeinheiten zwischen der gegenüberliegenden Seitenwand und dem zweiten Gang umfasst.

4. Flugzeugkabine umfassend eine Passagiersitzanordnung gemäß einem vorhergehenden Anspruch, wobei das Fußaufnahmeende ferner eine zusätzliche Bettfläche (340) umfasst, wobei die zusätzliche Bettfläche (340) sich in einer solchen Höhe befindet, dass sie koplanar mit der flachen Schlaffläche ist, wenn die Sitzeinheit sich in der Flachbettkonfiguration befindet.

5. Flugzeugkabine umfassend eine Passagiersitzanordnung gemäß einem vorhergehenden Anspruch, wobei das Fußaufnahmeende (33) eine obere Tischfläche (27) umfasst, wobei die Tischfläche (27) sich in einer Höhe befindet, die höher ist als die Höhe der flachen Schlaffläche, wenn die Sitzeinheit sich in der Flachbettkonfiguration befindet.

6. Flugzeugkabine umfassend eine Passagiersitzanordnung gemäß Anspruch 5, wobei die obere Tischfläche (27) zur Verwendung durch den Passagier in der benachbarten Sitzeinheit im benachbarten Paar (9) Sitzeinheiten dient.

7. Flugzeugkabine umfassend eine Passagiersitzanordnung gemäß Anspruch 5 oder Anspruch 6, wobei das Fußaufnahmeende (33) eine Trennwand umfasst, die die obere Tischfläche von einem Passagier dieser Sitzeinheit abschirmt.

8. Flugzeugkabine umfassend eine Passagiersitzanordnung gemäß einem vorhergehenden Anspruch, wobei die Fußmodule (33) eine erste g-Level-Zertifizierung besitzen und die Hauptteilmodule (31) eine zweite, höhere g-Level-Zertifizierung besitzen.

9. Flugzeugkabine umfassend eine Passagiersitzanordnung gemäß einem vorhergehenden Anspruch, wobei jedes Fußmodul (33) einen Schirm (35) zum Schutz der Privatsphäre zwischen den Paaren umfasst, der zwischen den zwei Fußaufnahmeenden verläuft, und wobei der Schirm (35) zum Schutz der Privatsphäre zwischen den Paaren nicht parallel zur gemeinsamen Grenze zwischen den Sitzeinheiten verläuft.

10. Flugzeugkabine umfassend eine Passagiersitzanordnung gemäß einem vorhergehenden Anspruch, wobei jede Sitzeinheit eine Mittelachse umfasst, die den spitzen Winkel zur Längsachse des Flugzeugs bildet, und wobei das Fußaufnahmeende von der Mittelachse seitlich versetzt ist, und
wobei der Versatz in einer Richtung weg von der benachbarten Sitzeinheit im benachbarten Paar (9) Sitzeinheiten liegt, so dass dieser den Zugang zur benachbarten Sitzeinheit im benachbarten Paar erleichtert.

11. Flugzeugkabine umfassend eine Passagiersitzanordnung gemäß einem vorhergehenden Anspruch, wobei jeder Hauptteil (23) eine Verkleidung umfasst, die sich hinter dem Sitzrücken befindet und sich vom Gangboden bis zu einer ersten Höhe erstreckt, und die Stirnwand (26) des Fußaufnahmeendes sich vom Gangboden bis zu einer zweiten, geringeren Höhe erstreckt,
wobei der seitliche Mindestabstand über den Gang zwischen den Verkleidungen der nach außen gewandten Sitzeinheiten (11b) in jeder Reihe (C1, C2) größer als der seitliche Mindestabstand über den Gang zwischen den Stirnwänden (26) der nach innen gewandten Sitzeinheit (11a) in jeder Reihe (C1, C2) ist.

12. Flugzeugkabine umfassend eine Passagiersitzanordnung gemäß einem vorhergehenden Anspruch, wobei der spitze Winkel wenigstens 34 Grad oder mehr beträgt.

13. Flugzeugkabine umfassend eine Passagiersitzanordnung gemäß einem vorhergehenden Anspruch, wobei die Paare von Sitzeinheiten in der ersten Reihe versetzt sind, in einer Längsrichtung, von den Paarten von Sitzeinheiten in einer zweiten Reihe.

## Revendications

1. Cabine d'avion comprenant un agencement de sièges pour passagers, l'agencement de sièges pour passagers comprenant une première colonne (C1) d'unités de sièges et une deuxième colonne (C2) d'unités de sièges, les première et deuxième colonnes (C1, C2) étant séparées par un couloir, et les colonnes d'unités de sièges et le couloir (5) s'étendant tous dans une direction longitudinale parallèle à l'axe longitudinal de la cabine d'avion, et dans laquelle
chaque colonne (C1, C2) comprend une multiplicité de paires (9) d'unités de sièges, les paires (9) d'unités de sièges étant agencées consécutivement suivant la direction longitudinale,
chaque unité de siège étant configurable entre une configuration de siège et une configuration de couchette,
dans laquelle chaque paire (9) d'unités de sièges comprend :
une unité de siège orientée vers l'intérieur (11a) inclinée d'un angle aigu par rapport à l'axe longitudinal de l'avion et orientée vers l'intérieur en direction du couloir (5) ;
une unité de siège orientée vers l'extérieur (11b) inclinée du même angle aigu par rapport à l'axe longitudinal de l'avion, mais orientée vers l'extérieur à l'opposé du couloir (5) ;
les unités de sièges orientées vers l'intérieur et vers l'extérieur (11a, 11b) se bordant l'une l'autre le long d'une limite commune,
et dans laquelle
la première colonne (C1) est positionnée adjacente à une paroi latérale (20) de la cabine d'avion, et
la deuxième colonne (C2) est positionnée adjacente soit à un deuxième couloir, soit à la paroi latérale opposée de la cabine,
dans laquelle chaque unité de siège comprend un corps principal (23) et une extrémité de réception de pieds (25),
le corps principal (23) comprenant des éléments de siège mobiles agencés de sorte que lorsque l'unité de siège se trouve dans la configuration de siège, les éléments de siège forment un siège pour passager, mais lorsque l'unité de siège se trouve dans la configuration de couchette, les éléments de siège forment une surface de couchage sensiblement plane, et
l'extrémité de réception de pieds (25) étant configurée pour recevoir les pieds d'un passager lorsque l'unité de siège se trouve dans la configuration de couchette, l'extrémité de réception de pieds comprenant une paroi (26) s'étendant selon au moins une partie d'un périmètre de l'extrémité de réception de pieds (25), et
dans laquelle chaque colonne (C1, C2) comprend une pluralité de modules de corps principal (31), et une pluralité de modules de pieds (33),
**caractérisée en ce que**
chaque module de corps principal (31) est formé des corps principaux de chacune des unités de sièges dans une paire (9) d'unités de sièges, et
chaque module de pieds (33) comprend l'extrémité de réception de pieds (25) d'une unité de siège orientée vers l'intérieur (11a) d'une paire (9) d'unités de sièges, et l'extrémité de réception de pieds de l'unité de siège orientée vers l'extérieur (11b) dans une paire (9) adjacente d'unités de sièges, et
les modules de corps principal (31) et les modules de pieds (33) sont des structures indépendantes et sont situés alternativement suivant la direction longitudinale de chaque colonne (C1, C2).

2. Cabine d'avion comprenant un agencement de sièges pour passagers selon la revendication 1, dans laquelle la deuxième colonne (C2) est positionnée adjacente à la paroi latérale opposée de la cabine.

3. Cabine d'avion comprenant un agencement de sièges pour passagers selon la revendication 1, dans laquelle la deuxième colonne (C2) est positionnée adjacente à un deuxième couloir, et l'agencement comprend en outre une troisième colonne (C3) de paires d'unités de sièges entre la paroi latérale opposée et le deuxième couloir.

4. Cabine d'avion comprenant un agencement de sièges pour passagers selon une quelconque revendication précédente, dans laquelle l'extrémité de réception de pieds comprend en outre une surface de lit auxiliaire (340), la surface de lit auxiliaire (340) étant à une hauteur telle qu'elle est coplanaire avec la surface de couchage plane lorsque l'unité de siège se trouve dans la configuration de couchette.

5. Cabine d'avion comprenant un agencement de sièges pour passagers selon une quelconque revendication précédente, dans laquelle l'extrémité de réception de pieds (33) comprend une surface de table supérieure (27), la surface de table (27) étant située à une hauteur supérieure à la hauteur de la surface de couchage plane lorsque l'unité de siège se trouve dans la configuration de couchette.

6. Cabine d'avion comprenant un agencement de sièges pour passagers selon la revendication 5, dans laquelle la surface de table supérieure (27) est destinée à une utilisation par le passager dans l'unité de siège adjacente dans la paire (9) adjacente d'unités de siège.

7. Cabine d'avion comprenant un agencement de sièges pour passagers selon la revendication 5 ou la revendication 6, dans laquelle l'extrémité de réception de pieds (33) comprend une cloison isolant la surface de table supérieure d'un passager de cette unité de siège.

8. Cabine d'avion comprenant un agencement de sièges pour passagers selon une quelconque revendication précédente, dans laquelle les modules de pieds (33) sont certifiés pour un premier niveau de g, et les modules de corps principal (31) sont certifiés pour un second niveau de g, plus élevé.

9. Cabine d'avion comprenant un agencement de sièges pour passagers selon une quelconque revendication précédente, dans laquelle chaque module de pieds (33) comprend un écran de séparation inter-paire (35) s'étendant entre les deux extrémités de réception de pieds, et dans laquelle l'écran de séparation inter-paire (35) est non-parallèle à la limite commune entre les unités de sièges.

10. Cabine d'avion comprenant un agencement de sièges pour passagers selon une quelconque revendication précédente, dans laquelle chaque unité de siège comprend un axe central, formant l'angle aigu par rapport à l'axe longitudinal de l'avion, et dans laquelle l'extrémité de réception de pieds est décalée latéralement par rapport à l'axe central, et
dans laquelle le décalage est dans une direction opposée à l'unité de siège adjacente dans la paire (9) adjacente d'unités de sièges, de sorte qu'il facilite l'accès à cette unité de siège adjacente dans la paire adjacente.

11. Cabine d'avion comprenant un agencement de sièges pour passagers selon une quelconque revendication précédente, dans laquelle chaque corps principal (23) comprend une protection située derrière le dossier de siège et s'étendant jusqu'à une première hauteur depuis le sol du couloir, et la paroi d'extrémité (26) de l'extrémité de réception de pieds s'étend jusqu'à une seconde hauteur, inférieure, depuis le sol du couloir
dans laquelle la distance latérale minimale à travers le couloir entre les épaulements des unités de sièges orientées vers l'extérieur (11b) dans chaque colonne (C1, C2), est supérieure à la distance latérale minimale à travers le couloir entre les parois d'extrémité (26) de l'unité de siège orientée vers l'intérieur (11a) dans chaque colonne (C1, C2).

12. Cabine d'avion comprenant un agencement de sièges pour passagers selon une quelconque revendication précédente, dans laquelle l'angle aigu est d'au moins 34 degrés ou plus.

13. Cabine d'avion comprenant un agencement de sièges pour passagers selon une quelconque revendication précédente, dans laquelle les paires d'unités de sièges dans la première colonne sont décalées, dans une direction longitudinale, par rapport aux paires d'unités de sièges dans la seconde colonne.
